## Europäisches Patentamt

(19) **European Patent Office**

(11) Numéro de publication: **0 136 224**

**Office européen des brevets** **B1**

(12) # FASCICULE DE BREVET EUROPÉEN

(45) Date de publication du fascicule du brevet: **02.11.88**

(51) Int. Cl.⁴: **A 01 J 25/00**

(21) Numéro de dépôt: **84401738.4**

(22) Date de dépôt: **29.08.84**

(54) **Installation pour la fabrication de fromages.**

(30) Priorité: **30.08.83 FR 8313872**

(43) Date de publication de la demande:
**03.04.85 Bulletin 85/14**

(45) Mention de la délivrance du brevet:
**02.11.88 Bulletin 88/44**

(84) Etats contractants désignés:
**AT BE CH DE GB IT LI LU NL SE**

(56) Documents cité:
**CH-A-405 808**
**FR-A-1 427 636**
**FR-A-1 467 973**
**FR-A-2 164 766**
**US-A-3 918 356**

(73) Titulaire: **Le Guen, Annick, épouse Moutarde, 15, Chemin de la Barre, F-42110 Feurs (FR)**
Titulaire: **Moutarde, Joseph, 15, Chemin de la Barre, F-42110 Feurs (FR)**

(72) Inventeur: **Le Guen, Annick, épouse Moutarde, 15, Chemin de la Barre, F-42110 Feurs (FR)**
Inventeur: **Moutarde, Joseph, 15, Chemin de la Barre, F-42110 Feurs (FR)**

LIBER, STOCKHOLM 1988

## Description

Cette invention concerne une installation automatique de fabrication de fromages, notamment à caractères lactiques ou de fromages du type à pâte molle.

On sait que le lait qui est utilisé dans la fabrication des fromages subit un certain nombre de préparations qui sont successivement
- l'emprésurage et le caillage;
- le découpage du caillé, opération souvent dénommée "décaillage";
- la séparation spontanée du sérum ou du caillé avec ou sans action mecanique;
- l'extraction du sérum;
- le moulage du caillé pour la réalisation des fromages et,
- l'égouttage des fromages moulés ainsi obtenus.

Pour effectuer ces opérations, on met en oeuvre à l'heure actuelle un matériel qui se compose essentiellement:
- de récipients pour le caillage du lait, dont la capacité peut varier de quelques dizaines de litres et plusieurs milliers de litres;
- de moules à fromages ou de blocs-moules;
- de plateaux pour recevoir les moules ou les blocs-moules et,
- de tables d'égouttage sur lesquelles sont posés les moules ou les plateaux de moules.

Dans ces installations connues, la manutention des récipients de caillage et des plateaux s'effectue soit manuellement, soit mécaniquement.

Pour la fabrication de fromages moulés à caractères lactiques, on utilise des récipients de caillage réalisés sous la forme de bassins dont la capacité varie généralement de 50 à 300 litres environ. L'opération de moulage s'effectue manuellement. Pour les fromages très fragiles, on utilise une louche, le fromager prenant une louche de caillé qu'il dépose avec précaution dans un moule. Il s'agit donc d'une opération longue et coûteuse. Pour les fromages nécessitant moins de précaution, on utilise une pelle à caillé. Le fromager dépose le caillé sur un répartiteur ou multi-moules. Cette opération est plus rapide que la précédente, mais elle est toujours manuelle.

Le moulage des fromages à pâtes molles, fleuries, lavées, brassées etc... nécessite moins de précaution. Dans ce cas, le caillage du lait s'effectue dans des récipients de formes diverses et de capacités très variables. Pour des capacités relativement peu importantes (jusqu'à environ 200 litres), on utilise des récipients de formes cylindriques, tronconiques, cubiques, parallélépipédiques etc... généralement appelés "bassines". Pour des capacités plus importantes, on utilise des cuves de formes très diverses, équipées de dispositifs permettant le travail du caillé et, parfois, d'un système de vide pour régler la vitesse de soutirage du mélange caillésérum. L'inconvénient majeur des grandes cuves réside dans le fait que la répartition du caillé dans les moules est difficile. Les fromages obtenus sont irréguliers et leurs poids très variables. Dans le cas de fromages vendus à la pièce, la rentabilité est mauvaise.

Pour diminuer les prix de revient, on a réalisé, au cours de ces dernières années, des systèmes mécaniques conçus pour manutentionner les bassines et pour les stocker sur des transporteurs horizontaux et pour vider ces bassines. Ces systèmes mécaniques, connus sous le terme "basculeurs de bassines" sont pourvus de vérins hydrauliques ou pneumatiques et ils permettent de vider le caillé qui est contenu dans la bassine pour alimenter un répartiteur. Suivant les types de matériels et les débits demandés par les utilisateurs, l'opération est plus ou moins brutale.

Ce type de matériel nécessite une chaîne de moulage pour un basculeur, en effet si on veut mouler doucement ou obtenir des cadences très importantes, il faut plusieurs appareils donc plusieurs lignes de moulage. La cadence maximale de ces installations connues se situe autour de 180 bassines/heure. Pour augmenter le volume horaire du lait caillé, on augmente la capacité des bassines, mais alors la répartition du caillé des moules est moins bonne et la rentabilité diminue dans le cas de fromages vendus à la pièce.

On pourrait également citer:

a) la machine, objet du brevet CH-A-405 808, qui permet la fabrication de fromages en continu et qui se compose essentiellement de deux tunnels entre lesquels se place une mouleuse.

Dans le premier tunnel des augets, incorporés entre deux chaines, circulent de manière continue pendant toute la durée des opérations de dosage du lait, préparation du caillé, moulage, lavage des augets avec retour au poste de dosage pour effectuer un nouveau cycle sans qu'il soit nécessaire de marquer un temps d'arrêt. Le tunnel d'égouttage e selon le même principe.

b) la machine, objet du brevet FR-A-1 467 973, permet le caillage et le moulage du lait, en utilisant des micro-bassines se déplaçant dans un tunnel.

c) La machine, objet du brevet US-A-3 918 356, qui utilise pour la coagulation des bassines d'une capacité voisine de 1000 l se déplaçant pendant la coagulation sur un chemin circulaire.

d) La machine, objet de la demande de brevet FR-A-2 164 766, qui permet d'effectuer en continu le pressage, l'égouttage, le démoulage et le saumurage de fromages de type pâtes molles pressées ou pâtes demi-cuites.

La présente invention, complètement différente dans sa conception, sa construction, sa technique et sa technologie, se propose d'apporter une installation permettant de cailler le lait et de mouler mécaniquement le caillé obtenu, tout en conservant aux fromages leurs caractéristiques spécifiques.

A cet effet, cette invention concerne une installation pour la fabrication de fromages, notamment à caractères lactiques et de fromages du type pâte molle, comprenant les

caractéristiques selon la revendication 1 et les revendications qui en dépendante.

Selon l'invention, la machine à mouler est une machine circulaire rotative à plusieurs têtes dont le nombre de têtes varie en fonction des débits, chaque tête de moulage comprenant une cloche demi-shérique dont les dimensions sont identiques à celles des bassines de caillage, chacune des dites cloches comportant essentiellement, une prise de vide automatique et un casse-vide.

D'autres caractéristiques et avantages de cette invention ressortiront de la description faite ci-après, en référence au dessin annexé qui en illustre un exemple de réalisation dépourvu de tout caractère limitatif. Sur le dessin:

- la Figure 1 est un schéma représentant une installation selon l'invention,
- la Figure 2 est une vue en coupe d'une bassine de caillage selon l'invention et,
- la Figure 3 est une représentation schématique de l'une des têtes de la machine à mouler.

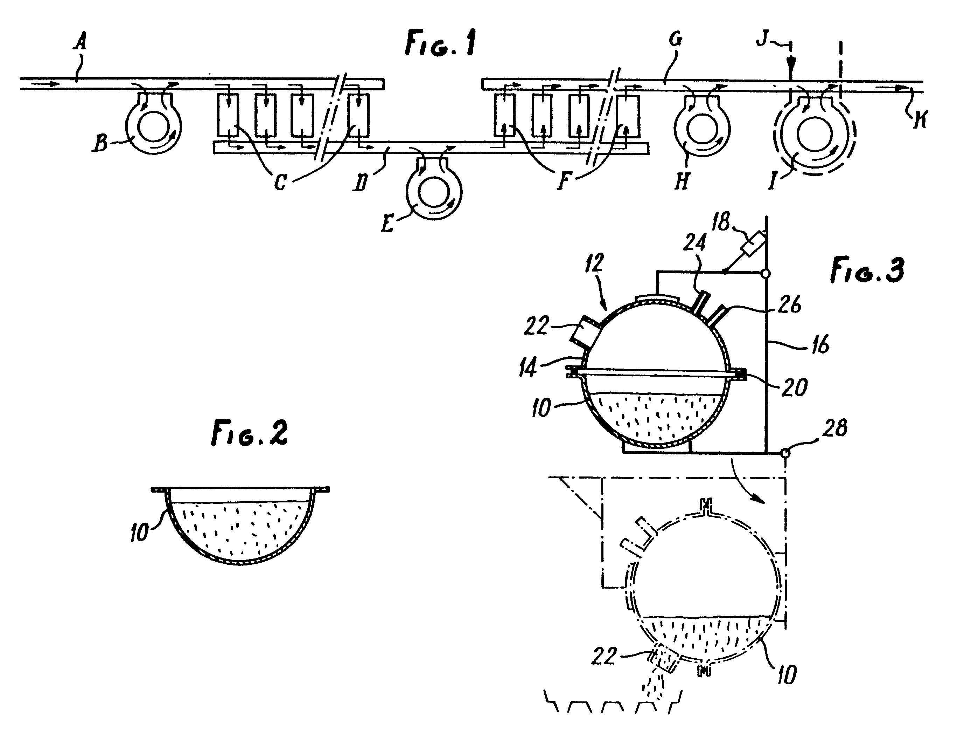

L'installation selon l'invention utilise une bassine de caillage 10 (Fig. 2), ayant la forme d'une demi-sphère permettant de communiquer au caillé un mouvement en tous sens, sans le briser. La capacité de cette bassine est variable, pouvant varier de 30 à 100 litres pour la fabrication de fromages vendus à la pièce, à des valeurs plus élevées pour des fromages vendus au poids. La bassine de caillage ne comporte aucun équipement intérieur, elle est totalement lisse et elle est pourvue de divers équipements (non représentés) pour assurer son transport mécanique, pour permettre son positionnement sur les différents postes de l'installation et pour assurer sa fermeture, comme on le verra ci-après, par une demi-sphère identique.

Si on se réfère à la Figure 1, on voit qu'une installation selon l'invention comprend essentiellement:
- un système transporteur A pour transférer les bassines vides;
- un dispositif de remplissage et de dosage B du lait dans les bassines de caillage;
- un système de stockage C des bassines pleines, pendant toute la durée de la coagulation;
- un système transporteur D pour transférer les bassines contenant le caillé au poste de découpage du caillé;
- un dispositif E de découpage de caillé (ou de décaillage);
- une installation de stockage F des bassines contenant le caillé découpé;
- un transporteur G pour transférer les bassines au poste suivant;
- un dispositif d'extraction du sérum H;
- une machine automatique de moulage I associée à un transporteur J de plateaux et
- un système transporteur K pour emmener les bassines vides vers un tunnel de lavage et pour les ramener au dispositif de remplissage B.

Le dispositif de remplissage et de dosage B du lait dans les bassines de caillage se présente, selon l'invention, sous la forme d'un système doseur rotatif, du type remplisseuse de bouteilles, le remplissage des bassines amenées par le transporteur A, s'effectuant en continu.

Après remplissage, les bassines remplies de lait sont amenées dans l'installation de stockage C qui, selon l'invention, comporte une pluralité de silos verticaux conditionnés et mécanisés, la prise en charge et la sortie des bassines s'effectuant de façon automatique. Ce système de stockage constitue une amélioration importante par rapport au système actuellement utilisé selon lequel le stockage des bassines de caillage s'effectue soit directement sur le sol, soit sur des transporteurs horizontaux, ce qui se traduit par un encombrement au sol important. Par ailleurs, pendant toute la durée de la coagulation du lait dans les bassines, la température de l'enceinte de stockage est maintenue à une valeur élevée, de l'ordre de 22 à 40°C, suivant le type de fromage fabriqué et il en résulte des conditions de travail souvent pénibles pour les fromagers, d'autant plus que le degré d'hygrométrie est élevé. La caractéristique de l'invention selon laquelle on stocke les bassines de caillage dans des silos conditionnés permet de diminuer la surface d'encombrement au sol et d'obtenir des températures plus agréables dans les salles de travail. Par ailleurs, le nettoyage des silos de stockage et des équipements intérieurs (chaînes, convoyeurs, roues et galets d'entraînement etc ...) s'effectue en circuit fermé.

Les bassines contenant le caillé provenant des silos de stockage C sont délivrées en continu par le transporteur D au dispositif de décaillage E. On sait qu'à l'heure actuelle, les opérations de découpe du caillé ou décaillage sont effectuées manuellement avec un tranche caillé. Dans l'installation conforme à l'invention, on utilise une machine rotative munie de plusieurs têtes de travail dont le nombre varie en fonction de la cadence recherchée. Les têtes de travail sont pourvues d'un tranche-caillé adapté à chaque type de fromage et éventuellement d'un brise-lame pour arrêter la masse de caillé. L'opération de tranchage du caillé est effectuée en un ou plusieurs mouvements. A la fin des opérations de décaillage, les bassines sont successivement amenées par le transporteur D dans des silos de stockage F.

Avant l'opération de moulage, les bassines contenant le caillé tranché sont amenées successivement au poste d'extraction du sérum où est positionnée une machine tournante H comportant une ou plusieurs têtes de pompage, en fonction des cadences. Chaque tête de pompage du sérum est munie d'un filtre et la bassine peut recevoir éventuellement une position inclinée.

Après l'extraction du sérum, on amène, toujours en continu, les bassines au poste de moulage à l'aide du transporteur G. Ce poste est équipé d'une machine à mouler I qui, selon

l'invention, répond aux exigences suivantes:

a) obtention de cadences de moulage très variables, quelle que soit la vitesse de vidange des bassines contenant le caillé;

b) possibilité de régler la vitesse de vidange en fonction de la consistance du caillé;

c) possibilité d'adapter ce matériel dans une chaîne automatisée.

Pour répondre à ces exigences, l'invention met en oeuvre une machine de moulage du type circulaire à plusieurs têtes de travail fonctionnant de façon que le temps qui s'écoule entre le moment ou une bassine est présente dans la machine et celui où elle en sort est constant, indépendamment de la vitesse et de la cadence de moulage. A cet effet, la machine à mouler selon l'invention se présente sous la forme d'un système de conception voisine de celle d'un emboutailleur à têtes multiples dont le diamètre et le nombre de têtes augmentent au fur et à mesure qu'augmentent les débits. Pour garder la possibilité de mouler différents types de fromages sur une même machine et la rendre très polyvalente, elle est équipée d'un moto-variateur de vitesses.

Par exemple: une machine de moulage pourra mouler 200 bassines de 50 litres à l'heure en pâtes molles, soit 10 000 litres/heure. Le temps de passage d'une bassine dans la machine étant de 1 minute environ et en changeant sa vitesse, on pourra mouler 80 ou 100 bassines de 50 litres de caillé lactique beaucoup plus fragile, le temps de passage étant porté à 2 minutes ou plus.

La figure 3 représente, de façon schématique, une tête de moulage désignée dans son ensemble par la référence 12, équipant la machine à mouler selon l'invention. On voit que cette tête de moulage 12 comprend essentiellement une cloche semi-sphérique 14 dont les dimensions sont identiques à celles des bassines de caillage 10, un bâti articulé 16 recevant la cloche et un moyen de serrage approprié, notamment un vérin 18, pour appliquer et maintenir la cloche 14 sur la bassine 10 contenant le caillé. La cloche 14 est équipée essentiellement d'un système de joint 20 pour assurer son étanchéité par rapport à la bassine de caillé 10 sur laquelle elle vient se positionner pour en assurer la vidange, d'une vanne de vidange automatique 22, d'une prise de vide automatique 24 et d'un casse vide 26.

Le fonctionnement est le suivant:

Après serrage de la cloche 14 sur la bassine 10 à l'aide du vérin 18, on réalise un vide partiel dans la cloche, puis on fait pivoter l'ensemble autour du point d'articulation 28 du bâti 16 jusqu'à ce que la vanne de vidange 22 arrive au point bas. A ce moment, cette vanne 22 s'ouvre totalement et le caillé s'écoule sur le plateau répartiteur 30, amené par le transporteur J (Fig. 1), la vitesse d'écoulement variant en fonction de la valeur du vide régnant dans la cloche.

Ensuite, les bassines vides sont reprises par le transporteur K pour passer dans une installation de lavage et être ensuite ramenées au poste de remplissage B.

Après moulage, les fromages sont dirigés vers des salles d'égouttage, de préférence conditionnées, ou dans des cellules d'égouttage préfabriquées, comportant une installation de conditionnement d'air, un système transporteur et des moyens de nettoyage en circuit fermé. Suivant les cas:

- les fromages demeurent dans la même cellule où les températures de l'air varient en fonction du degré d'égouttage;

- les fromages passant dans des cellules où règnent des températures différentes en fonction de leur point d'égouttage.

On comprend de la lecture de la description qui précède que l'invention permet de réaliser des chaînes automatiques de fabrication de fromages, permettant la coagulation et le moulage de fromages à caractères lactiques ou de fromages du type pâtes molles à des cadences variant de quelques centaines de litres à l'heure à plus de 25 000 litres/heure.

**Revendications**

1. Installation pour la fabrication de fromages, notamment à caractères lactiques et de fromages du type à pâte molle, comprenant un circuit transporteur assurant le transport et l'avancement de bassines de caillage en forme semi-circulaire (10) à travers plusieurs postes, parmi lesquels se trouvent un poste avec un dispositif doseur (B) à au moins une tête pour effectuer le remplissage et le dosage du lait, un poste (C) à couloirs verticaux pour assurer le stockage des bassines pendant toute la durée de la coagulation, un poste (E) avec un dispositif de découpage du caillé à au moins une tête de travail pour découper le caillé, un système de transfert automatique des dites bassines du circuit transporteur vers une machine à mouler (I) circulaire rotative à plusieurs postes de réception d'une bassine, un système de transfert automatique des bassines vides de la machine à mouler vers le circuit transporteur, des moyens de lavage des bassines vides, le circuit transporteur assurant le retour des bassines lavées au poste (B) de remplissage et les dites bassines (10) étant dépourvues d'équipement interne tout en étant munies de moyens externes pour assurer leur transport et leur manutention, caractérisée en ce que:

- les bassines de caillage sont en forme de demi-sphère (10) et sont munies de moyens pour assurer leur fermeture avec une demi-sphère identique éventuelle,

- le circuit transporteur est composé de plusieurs systèmes transporteur (A, D, G) distincts, séparés entre eux par des postes de stockage, comprenant, notamment, le poste (C) pour la coagulation du caillé, ces postes de stockage comportant une pluralité de silos verticaux à ambiance conditionnée propre et pourvus de moyens de transport et de transfert mécanisés des bassines,

- l'installation comporte, avant le poste de moulage, un poste (H) d'extraction du sérum des bassines,

- et chaque poste de réception d'une bassine de caillé de la machine à mouler (1) comprend une cloche demi-sphérique (14) apte à coiffer la bassine de caillé de façon étanche et comportant une vanne de vidange automatique (22), une prise de vide automatique (22) et un casse-vide, le poste de réception assurent le pivotement de l'ensemble sphérique ainsi formé de manière à permettre l'écoulement du caillé par la vanne de vidange vers un plateau répartiteur multi-mouler disposé en dessous, le vide réalisé dans la sphère réglant la vitesse d'écoulement.

2. Installation selon la revendication 1, caractérisée en ce que le dispositif d'extraction du sérum (H) est constitué par un système rotatif, comportant une ou plusieurs têtes de pompage, chaque tête pouvant être munie d'un filtre.

3. Installation selon l'une des revendication 1 ou 2, caractérisée en ce que la machine à mouler (I) est une machine circulaire rotative dont le diamètre et le nombre de têtes varient en fonction des débits et qui comporte un moto-variateur de vitesses pour conserver la possibilité de mouler différents types de fromages sur une même machine.

4. Installation selon l'une quelconque des revendications précédentes, caractérisée en ce qu'elle comporte des cellules d'égouttage préfabriquées, équipées de transporteurs mécanisés, d'un système de conditionnement d'air et de moyens de nettoyage en circuit fermé, ces cellules recevant les fromages provenant du poste de moulage.

**Patentansprüche**

1. Anlage zur Herstellung von Käse, namentlich Säuremilchkäse und Weichkäse, mit einem halbkreisförmigen, mehrere Stationen durchlaufenden Förderkreislauf (10) zum Transport und Vorschub der Gerinnungswannen, unter denen sich ein Arbeitsplatz mit einer Dosiervorrichtung (B) mit einem oder mehreren Dosierköpfen zum Abfüllen und zur Dosierung der Milch befindet, sowie eine Station (C) mit senkrechten Gängen zur Lagerung der Wannen während der gesamten Dauer der Gerinnung, eine Station (E) mit einer Vorrichtung zum Zerschneiden des Käsebruchs mit mindestens einem Arbeitskopf zum Zerschneiden des Käsebruchs, ein automatisches Fördersystem, mit dem die besagten Wannen vom Förderkreislauf zu einer runden Rotationsformmaschine (1) mit mehreren Aufnahmeplätzen für jeweils eine Wanne transportiert werden, ein System der automatischen Forderung der leeren Wannen von der Formmaschine zum Förderkreislauf, Einrichtungen zum Waschen der leeren Wannen, der Förderkreislauf für den Rücklauf der gewaschenen Wannen zur Füllstation (B), wobei die besagten Wannen (10) mit keinerlei Inneneinrichtungen, jedoch mit Außeneinrichtungen für ihren Transport und ihre Handhabung ausgestattet sind, <u>dadurch gekennzeichnet, daß</u>

- die Gerinnungswannen (10) halbkugelförmig ausgebildet und mit Vorrichtungen für den eventuellen Verschluß mit einer identischen Halbkugel ausgestattet sind,

- der Förderkreislauf aus mehreren unterschiedlichen Transportsystemen (A, D, G) besteht, die voneinander durch Lagerstationen getrennt sind, die namentlich die Station (C) für die Gerinnung des Käsebruchs enthalten, wobei diese Lagerstationen mit einer Vielzahl senkrechter Lagersilos mit Eigenklimatisierung und mechanischen Einrichtungen zum Transport und zur Abnahme der Wannen ausgestattet sind,

- in der Anlage der Station zum Abfüllen in Formen eine Station (H) zum Entzug der Molke aus den Wannen vorgeschaltet ist,

- jede jeweils eine den Käsebruch enthaltene Wanne aufnehmende Station der Formmaschine (I) eine halbkugelförmige Glocke (14) umfaßt, die die den Käsebruch enthaltene Wanne dicht abdecken kann, und mit einem automatischen Entleerungsventil (22), einem automatischen Vakuumanschluß (22) und einem Vakuumbrecher ausgerüstet ist, wobei die Aufnahmestation das somit gebildete kugelförmige Ganze derart schwenkt, um den Abfluß des Käsebruchs über das Entleerungsventil zur darunter angeordneten mit mehreren Formen bestückten Verteilerplatte zu ermöglichen, wobei das in der Kugel erstellte Vakuum die Fließgeschwindigkeit reguliert.

2. Anlage nach Anspruch 1 dadurch gekennzeichnet, daß die Vorrichtung (H) zum Entzug der Molke aus einem Drehsystem besteht, das mit einem oder mehreren Pumpköpfen versehen ist, wobei jeder Pumpkopf mit einem Filter ausgestattet sein kann.

3. Anlage nach einem der Ansprüche 1 oder 2 dadurch gekennzeichnet, daß es sich bei der Formmaschine um eine runde Rotationsmaschine handelt, deren Durchmesser und die Anzahl der Arbeitsköpfe als Funktion der Durchsatzleistungen variieren, und die mit einem stufenlos regelbaren Getriebemotor ausgestattet ist, damit die Möglichkeit besteht, auf ein und derselben Maschine verschiedene Käsesorten formen zu können.

4. Anlage nach irgendeinem der vorab genannten Ansprüche dadurch gekennzeichnet, daß sie mit vorgefertigten Abtropfkammern ausgestattet ist, die mit mechanischen Transporteinrichtungen, einem Klimatisierungssystem und Reinigungseinrichtungen im geschlossen Kreislauf bestückt sind, wobei diesen Kammern der von der Formstation kommende Käse zugeführt wird.

## Claims

1. Installation designed to produce cheeses, notably with lactic characteristics and soft paste type cheeses, comprising a conveyer circuit transporting and advancing curdling basins, in semi-circular form (10) through several stations, amongst which is a station with a doser device (B) with at least one head to fill and dose the milk, a vertical corridor station (C) storing the basins throughout the coagulation time, a station (E) with a curdle splitting device and at least one working head to split the curdle an automatic system transferring the said basins from the conveyer circuit to a circular, rotary moulding machine (I) with several basin intake stations, an automatic system of transferring the empty basins from the moulding machine to the conveyer circuit, means for washing empty basins, the conveyer circuit returning the washed basins to filling station (B) and said basins (10) being without any internal equipment whilst being provided with external means for ensuring their transport and handling, wherein:
   - the curdling basins are in semi-spherical form (10) and are provided with means for ensuring their closing, with a possible identical semi-sphere,
   - the conveyer circuit consists of several distinct conveyer systems (A, D, G) separated from each other by storage stations notably comprising station (G) for the coagulation of the curdle, these storage stations comprising a number of vertical silos, with a clean conditioned environment, and provided with mechanized means of basin transport and transfer,
   - before the moulding station, the installation comprises a station (H) extracting the serum from the basins,
   - and each station intaking a basin of curdle from the moulding machine (I) comprises a semi-spherical (14) designed to cover the basin of curdle tightly and containing an automatic drainage valve (22), an automatic vacuum plug (22) and a vacuum breaker, the intake station pivoting the spherical system thus formed so that the curdle can flow out through the drain valve to a multi-moulder distributor tray placed underneath, the speed of flow being governed by the vacuum prevailing in the sphere.

2. Installation as claimed in claim 1, wherein the serum extraction device (H) consists of a rotary system, comprising one or several pumping heads, each head can be equipped with a filter.

3. Installation as claimed in claims 1 or 2, wherein the moulding machine (I) is a circular, rotary machine whose diameter and number of heads vary depending on the flowrates and which comprises a speed variator to preserve the possibility of moulding different types of cheese on the same machine.

4. Installation as claimed in any one of the above claims, wherein it comprises prefabricated draining cells, equipped with mechanized conveyers, an air conditioning system and closed circuit means for cleaning, these cells taking the cheeses from the moulding station.

Fig.1

A · B · C · D · E · F · G · J · H · I · K

Fig.3

18 · 24 · 26 · 12 · 22 · 16 · 14 · 20 · 10 · 28

Fig.2

10

22 · 10

0 136 224